(19) Europäisches Patentamt / European Patent Office / Office européen des brevets

(11) **EP 4 693 855 A1**

(12) **EUROPEAN PATENT APPLICATION**

(43) Date of publication:
**11.02.2026 Bulletin 2026/07**

(21) Application number: **24193006.4**

(22) Date of filing: **06.08.2024**

(51) International Patent Classification (IPC):
*H02M 1/00* (2006.01)       *H02M 3/00* (2006.01)
*H02M 3/28* (2006.01)       *H02M 3/335* (2006.01)

(52) Cooperative Patent Classification (CPC):
**H02M 1/0074; H02M 1/0093;** H02M 1/0058;
H02M 3/01; H02M 3/285; H02M 3/33573

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **ABB Schweiz AG
5400 Baden (CH)**

(72) Inventors:
• **BOEHLER, Julian
  8006 Zürich (CH)**
• **PETTERSSON, Sami
  8953 Dietikon (CH)**
• **CANALES, Francisco
  5405 Baden-Dättwil (CH)**
• **ROTHMUND, Daniel
  5243 Mülligen (CH)**

(74) Representative: **Sykora & König Patentanwälte
PartG mbB
Maximilianstraße 2
80539 München (DE)**

(54) **ISOP CONVERTER WITH FIXED TRANSFORMATION RATIO AND AUXILIARY SERIES CONVERTER FOR VOLTAGE CONTROL**

(57)     A converter arrangement (20) for converting a first DC bus voltage into a second DC bus voltage is described. The converter arrangement (20) comprises: an input connection (38) for electrically coupling the converter arrangement (20) to an energy source, wherein the energy source is configured for providing the first DC bus voltage; an output connection (48) for electrically coupling the converter arrangement (20) to a load, wherein the load is configured for receiving the second DC bus voltage; two or more first electrical converters (22) each having a corresponding input terminal and a corresponding output terminal, wherein the input terminals of the first electrical converters (22) are electrically coupled to each other in series between a first pole of the input connection (38) and a second pole of the input connection (38) and wherein the output terminals of the first electrical converters (22) are electrically coupled to the output connection (48) in parallel; and at least one first auxiliary converter (24) electrically arranged in series between the output terminal of at least one of the first electrical converters (22) and the output connection (48) or between the input terminal of at least one of the first electrical converters (22) and the input connection (38).

**Fig. 4**

**Description**

FIELD OF THE INVENTION

The invention relates to the field of electrical DC/DC converters. In particular, the invention relates to a converter arrangement, to a method, a controller, and a computer program for operating the converter arrangement, and to a computer-readable medium on which the computer program is stored.

BACKGROUND OF THE INVENTION

Electrical DC/DC converters are configured for converting a first DC voltage as an input voltage into a second DC voltage as an output voltage. The electrical converters may be coupled to an energy source, such as a battery or a photovoltaic panel, with the energy source providing the first DC voltage, and to a DC load, such as a DC motor, for example, to apply the second DC voltage to the load. For example, LLC resonant converter, in short "LLC converter", dual-active bridge converter, forward converter, and flyback converter are well-known and widely established converter topology used in different industrial applications.

Normally, LLC converters have an input stage with a full-bridge and an output stage with a full-bridge inductively coupled to each other by a transformer, e.g., a primary converter winding and a secondary converter winding. They may be turned on and off at zero voltage which may lead to low or even no switching losses and/or enable high switching frequencies. Further, LLCs may be operated with fixed modulation parameters and thereby in a simple way. LLC converters are usually controlled by adapting their switching frequency in order to guarantee a stabilized output voltage. In some applications however, a stabilized output voltage is not necessarily required. The LLC converter can then be operated open-loop with a fixed switching frequency slightly below a resonance frequency of the corresponding LLC converter, e.g., in a Calf-Cycle Discontinuous Conduction Mode (HC-DCM). This operating mode simplifies a converter operation since no closed-loop control is required and is often desirable since it enables fully soft-switched operation.

When a power conversion from medium voltage DC to low voltage DC has to be accomplished, an often-used approach is to use several identical LLC converters and connect their inputs in series and their outputs in parallel. This structure may be referred to as Input-Series-Output-Parallel (ISOP) arrangement. In the presented example, LLC converters are used, however, any other isolated converter (e.g., DAB, phase-shifted full-bridge, etc.) can be employed. Having such an ISOP arrangement and using the HC-DCM enable to provide a fixed ratio between the input voltage and the output voltage of each LLC, which inherently guarantees equal voltage sharing between the LLCs on the input side since their output voltages are identical due to the parallel connection at their outputs, as well as equal load current sharing since their input currents are the same due to the series connection at their inputs.

However, due to the open-loop operation of the LLC converters, there is no possibility to control the output voltage of the ISOP stack. Additionally, in order to increase the maximum output power, it is often desirable to parallel connect several branches of ISOP connected LLC converters. In this case, there is no possibility to influence the distribution of the load currents between different ISOP branches since the converters are operated open-loop with fixed modulation parameters and the automatic balancing described before only ensures equal load sharing between the LLCs of each branch but not between different branches. Since input and output voltage of the paralleled branches are forced to the same value, the load current distribution is solely determined by the losses and parasitic elements, which can deviate significantly between different ISOP stacks. As a consequence, equal loading of the paralleled stacks cannot be guaranteed and large deviations may occur, thereby significantly reducing the available output power and/or overloading some of the paralleled branches.

DESCRIPTION OF THE INVENTION

It is an objective of the present invention to provide a converter arrangement, which is able to provide a high output power and/or in which an overloading of one or more electrical converters of the converter arrangement is prevented or at least aggravated.

It is a further objective of the present invention to provide a method, a controller, and a computer program for operating a converter arrangement, which enable to provide a high output power by the converter arrangement and/or to prevent an overloading of one or more electrical converters of the converter arrangement. It is another objective of the present invention to provide a computer-readable medium on which the computer program is stored.

These objectives are achieved by the subject-matter of the independent claims. Further exemplary embodiments are evident from the dependent claims and the following description.

A first aspect relates to a converter arrangement for converting a first DC bus voltage into a second DC bus voltage. The converter arrangement 20 comprises: an input connection for electrically coupling the converter arrangement to an energy source, wherein the energy source is configured for providing the first DC bus voltage; an output connection for electrically coupling the converter arrangement to a load, wherein the load is configured for receiving the second DC bus voltage; two or more first electrical converters each having a corresponding input terminal and a corresponding output terminal, wherein the input terminals of the first electrical converters are electrically coupled to each other in series between a first pole of the input connection and a second pole of the input connection and wherein the output terminals of the first electrical converters are electrically coupled to the output connection in parallel; and at least one first auxiliary converter electrically arranged in series between the output terminal of at least one of the first electrical converters and the output connection or between the input terminal of at least one of the first electrical converters and the input connection.

A second aspect relates to a method for operating the converter arrangement. The converter arrangement is configured for converting the first DC bus voltage into the second DC bus voltage and comprises a first branch of the first electrical converters which are electrically connected to each other in series at their input terminals and in parallel at their output terminals, and a second branch of second electrical converters which are electrically connected to each other in series at their input terminals and in parallel at their output terminals, wherein the second branch is electrically arranged in parallel to the first branch, wherein for each of the first electrical converters the at least one first auxiliary converter is electrically arranged in series with the corresponding first electrical converter, and wherein for each of the second electrical converters a corresponding second auxiliary converter is electrically arranged in series with the corresponding second electrical converter. The method comprises: receiving a first current value being representative of a first current through the first branch; receiving a second current value being representative of a second current through the second branch; determining a difference between the first and second current values; determining a first compensation voltage value depending on the difference such that the first current corresponds to the second current when a first compensation voltage corresponding to the first compensation voltage value is added to each first output voltage generated by the first electrical converters; and determining a second compensation voltage value depending on the difference such that the first current corresponds to the second current when a second compensation voltage corresponding to the second compensation voltage value is added to each second output voltage generated by the second electrical converters; sending a first compensation signal to the first auxiliary converter, wherein the first auxiliary converters are configured to add the first compensation voltage to the first output voltages generated by the corresponding first electrical converters upon receiving the first compensation signal; and sending a second compensation signal to the second auxiliary converters, wherein the second auxiliary converters are configured to add the second compensation voltage to the second output voltages generated by the corresponding second electrical converters upon receiving the second compensation signal.

This control scheme may be generalized to arbitrary numbers $N_{branch}$ of parallel connected electrical converters, where for the general case with $N_{branch}$ paralleled units, $(N_{branch} - 1)$ difference current controllers may be required to determine the setpoints for the auxiliary converters.

A third aspect relates to a controller for operating the converter arrangement. The controller comprises: a memory for storing one or more current values and/or one or more voltage values; and a processor communicatively coupled to the memory and being configured for carrying out the method as described above and in the following based on the one or more current values and/or one or more voltage values, respectively.

A fourth aspect relates to a computer program for operating the converter arrangement as described above and in the following. The computer program comprises computer-readable instructions which, when being executed by the processor of the controller, carry out the method as described above and in the following.

A fifth aspect relates to a computer-readable medium on which the computer program is stored. The computer-readable medium may be a floppy disk, a hard disk, an USB storage device, a RAM, a ROM, an EPROM or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The first auxiliary converters enable to add the first compensation voltage to the first output voltages generated by the corresponding first electrical converters. The second auxiliary converters enable to add the second compensation voltage to the second output voltages generated by the corresponding second electrical converters. These compensation voltages may be used to balance the load currents between different paralleled branches of electrical converters and/or to control the output voltage of either a single branch or several parallel connected branches.

The arrangement of the auxiliary converters electrically in series between the output terminals of the corresponding electrical converters and the output connection enables to provide a high output power of the converter arrangement and/or that an overloading of one or more electrical converters of the converter arrangement is prevented or at least aggravated.

The energy source is configured for providing the first DC bus voltage. The load is configured for receiving the second DC bus voltage. The first and second electrical converters each are configured for generating the second DC bus voltage. However, in the reality, the first output voltage generated by the first electrical converters and a second output voltage generated by the second electrical converters may differ from the second DC bus voltage to be generated by the corresponding electrical converter. So, the second DC bus voltage may be interpreted as an actual total output voltage generated by the converter arrangement, whereas the first and second output voltages may be interpreted as actual output voltages of the corresponding electrical converters.

The first compensation signal may be used to control one or more semiconductor switches of the first auxiliary converters. To this end, the first compensation signal may comprise gate pulses for controlling one or more semiconductor switches of the first auxiliary converters. The first compensation signal may be generated depending on the first compensation voltage value, e.g., by Pulse Width Modulation. The second compensation signal may be used to control one or more semiconductor switches of the second auxiliary converters. To this end, the second compensation signal may comprise gate pulses for controlling one or more semiconductor switches of the second auxiliary converters. The second compensation signal may be generated depending on the second compensation voltage value, e.g., by Pulse Width Modulation.

Preferably, the converter arrangement may comprise one single auxiliary converter per branch of electrical converters or one auxiliary converter per electrical converter. In case of one single auxiliary converter per branch, the electrical converters of the corresponding branch may be electrically arranged in parallel at their output terminals and the auxiliary converter may be electrically arranged in series between the parallelized output terminals of the corresponding electrical converters and the output connection. In other words, in this case, the electrical converters of each branch may be electrically arranged in parallel first and then the auxiliary converter may be electrically arranged in series with the parallelized electrical converters. In case of at least one auxiliary converter per electrical converter, each of the auxiliary converters may be electrically arranged in series between the individual output terminal of the corresponding electrical converter and the output connection, and the serial connected pairs of electrical converters and their respective auxiliary converters may be electrically arranged in parallel. In other words, in this case, the electrical converters may be electrically arranged in series with the corresponding auxiliary converters first and then the pairs of serial connected electrical converters and their respective auxiliary converters may be electrically connected in parallel with the other pairs of serial connected electrical converters and their auxiliary converters.

According to an embodiment, the converter arrangement comprises: at least one first auxiliary voltage source electrically coupled to the first auxiliary converter for providing electric energy to the first auxiliary converter, wherein the first auxiliary voltage source comprises at least one auxiliary winding, wherein each of the first electrical converters comprises at least one converter winding for converting the first DC bus voltage into the second DC voltage, and wherein the auxiliary winding is electrically coupled to the converter windings of each of the first electrical converters for receiving the electric energy from the first electrical converters.

According to an embodiment, each of the converter windings has a first end and a second end, and, when the converter arrangement comprises exactly two of the first electrical converters and exactly the one first auxiliary voltage source, a first end of the auxiliary winding of the first auxiliary voltage source is electrically coupled to the first end of one of the first electrical converters and a second end of the auxiliary winding is electrically coupled to the second end of the other one of the first electrical converters. So, a structure of the auxiliary voltage source may be simplified in the case of the exactly two series connected converters per ISOP branch. In particular, only a single auxiliary voltage source is required in this case, which may be connected to bridge terminals, i.e. the first and second ends of the electrical converters of the two first electrical converters.

According to an embodiment, when the converter arrangement comprises exactly the one first auxiliary voltage source, the first auxiliary voltage source comprises one dedicated auxiliary winding for each of the first electrical converters, wherein each of the auxiliary windings is electrically coupled to the converter winding of the corresponding first electrical converter. Rectification of the auxiliary converter supply voltage can either be done individually for each auxiliary power supply, or by directly connecting secondary windings of the electrical converters and rectification of the summed voltage. Using individual rectifiers may be required in case of interleaved operation of the LLCs, in which case the direct addition of the rectangular secondary side voltages could result to zero.

In case of ISOP branches, as in the present case, there is not a single LLC but several different identical ones coupled to each other. One could now think of connecting the auxiliary transformer to just any of the available LLC bridges, however, this may lead to an imbalance in power being consumed from different LLCs in one or both of the ISOP branches. As a consequence, this may impede the automatic balancing of the input voltages and output currents of the LLCs, eventually leading to large deviations between the load currents of the LLC on the low voltage side since the medium voltage side currents are forced to be identical due to the series connection while the transferred powers of the LLCs deviate. This is of particular importance when the auxiliary converters not only have to ensure load current balancing for paralleling of several ISOP branches (where only low auxiliary power would be required) but may be also used to regulate the output voltage over a wider input voltage range, where the auxiliary converters have to deliver a significant amount of the output power.

Therefore, according to an embodiment, the converter arrangement comprises: one dedicated first auxiliary voltage source for each of the first electrical converters, wherein each first auxiliary voltage source is electrically coupled to the corresponding first auxiliary converter for providing electric energy to the corresponding first auxiliary converter, wherein each of the first auxiliary voltage sources comprises at least one auxiliary winding, wherein the auxiliary windings are electrically coupled to the converter windings of the corresponding first electrical converter for receiving electric energy from the corresponding first electrical converter.

According to an embodiment, the first electrical converters, the first auxiliary converters, and the first auxiliary voltage sources form the first branch of the converter arrangement, and the converter arrangement comprises: the second branch being electrically arranged in parallel to the first branch and having two or more second electrical converters each having a corresponding input terminal and a corresponding output terminal, wherein the input terminals of the second electrical converters are electrically coupled to each other in series between the first pole of the input connection and the second pole of the input connection and wherein the output terminals of the second electrical converters are electrically coupled to the output connection in parallel; and at least one second auxiliary converter electrically arranged in series between the output terminals of the second electrical converters and the output connection.

A structure and functionality of the second auxiliary converter with respect to the second electrical converters may correspond to the structure and, respectively, functionality of the first auxiliary converter with respect to the first electrical converters, as explained in the following. The different embodiments of the first auxiliary converter explained above may be easily transferred to corresponding different embodiments of the second auxiliary converter.

The first and second auxiliary converters enable to balance a current through the converter arrangement with respect to the corresponding partial currents through the first branch and the second branch. In other words, the auxiliary converters enable a current balancing between the two branches such that at least approximately the same current flows through both branches.

Although only embodiments having one or two branches of electrical converters only are described in this description, any number of branches and electrical converters per branch may be used, wherein the power supply of each of the auxiliary converters may be obtained from additional windings of the respective electrical converters.

According to an embodiment, the converter arrangement comprises at least one first auxiliary converter for each of the first electrical converters, wherein the first auxiliary converters are electrically arranged in series between the output terminals of the corresponding first electrical converters and the output connection. Thus, each of the first electrical converters has its own auxiliary converter. So, instead of a single auxiliary converter for all of the first electrical converters, an individual, in other words dedicated, auxiliary converter for each first electrical converter may be used.

According to an embodiment, the converter arrangement comprises at least one first auxiliary voltage source for each of the first auxiliary converters, wherein the first auxiliary voltage sources are electrically coupled to the corresponding first auxiliary converters for providing electric energy to the corresponding first auxiliary converters, wherein each of the first auxiliary voltage sources comprises at least one auxiliary winding, wherein each of the first electrical converters comprises at least one converter winding for converting the first DC bus voltage into the second DC voltage, and wherein the auxiliary windings are electrically coupled to the converter windings of the corresponding first electrical converters for receiving the electric energy from the first electrical converters.

According to an embodiment, the first electrical converters, the first auxiliary converters, and the first auxiliary voltage sources form the first branch of the converter arrangement, the converter arrangement comprises the second branch being electrically arranged in parallel to the first branch and having two or more second electrical converters each having the corresponding input terminal and the corresponding output terminal, wherein the input terminals of the second electrical converters are electrically coupled to each other in series between the first pole of the input connection and the second pole of the input connection and wherein the output terminals of the second electrical converters are electrically coupled to the output connection in parallel; and the at least one second auxiliary converter for each of the second electrical converters, wherein the second auxiliary converters are electrically arranged in series between the output terminals of the corresponding second electrical converters and the output connection.

According to an embodiment, the first compensation voltage value is determined depending on the difference by determining a first compensation voltage reference value depending on the difference and by adding a predetermined bias voltage value to the first compensation voltage reference value; and/or the second compensation voltage value is determined depending on the difference by determining a second compensation voltage reference value depending on the difference and by adding the predetermined bias voltage value to the second compensation voltage reference value.

According to an embodiment, the method comprises: receiving a second DC bus voltage value corresponding to an actual second DC bus voltage actually generated by the converter arrangement; determining a difference between the second DC bus voltage value and a second DC bus voltage reference value, wherein the second DC bus voltage reference value corresponds to the second DC voltage to be generated by the converter arrangement; and controlling the first auxiliary converter and the second auxiliary converter depending on the difference between the second DC bus voltage value and the second DC bus voltage reference value such that the actual second DC bus voltage corresponds to the second DC bus voltage reference value.

So, the auxiliary converters may also be used to provide a regulated output voltage of several paralleled branches while simultaneously ensuring equal loading of all electrical converters, or to ensure a regulated output voltage of only a single branch. This is possible by adapting the control structure to a cascaded control structure incorporating an outer PI voltage controller for the output voltage and an individual inner current control loop for each auxiliary converter that controls the current in a corresponding buck filter inductor, as described below. However, depending on an input voltage variation a much larger output voltage range may have to be covered by the auxiliary converters in this case, thereby requiring a higher operating voltage of the auxiliary converters. This approach may be used for output voltage control of any number of paralleled branches, including only a single one, and is independent of the number of electrical converters per branch.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig. 1 shows an example of a DC/AC converter.

Fig. 2 shows an example of a DC/DC converter.

Fig. 3 shows an example of an electrical converter, in particular an LLC.

Fig. 4 shows a circuit diagram of a converter arrangement, in accordance with an embodiment of the present invention.

Fig. 5 shows a circuit diagram of a converter arrangement, in accordance with an embodiment of the present invention.

Fig. 6 shows a detailed view of an alternative to the converter arrangement of figure 5, in accordance with an embodiment of the present invention.

Fig. 7 shows a circuit diagram of a converter arrangement, in accordance with an embodiment of the present invention.

Fig. 8 shows a circuit diagram of a converter arrangement and of a controller for operating the converter arrangement, in accordance with an embodiment of the present invention.

Fig. 9 shows a detailed view of an alternative of a controller of the converter arrangement of figure 8, in accordance with an embodiment of the present invention.

Fig. 10 shows a circuit diagram of a converter arrangement and of a controller for operating the converter arrangement, in accordance with an embodiment of the present invention.

The reference symbols used in the drawings, and their meanings, are listed in summary form in the list of reference symbols. In principle, identical parts are provided with the same reference symbols in the figures.

DETAILED DESCRIPTION OF EXEMPLARY EMBODIMENTS

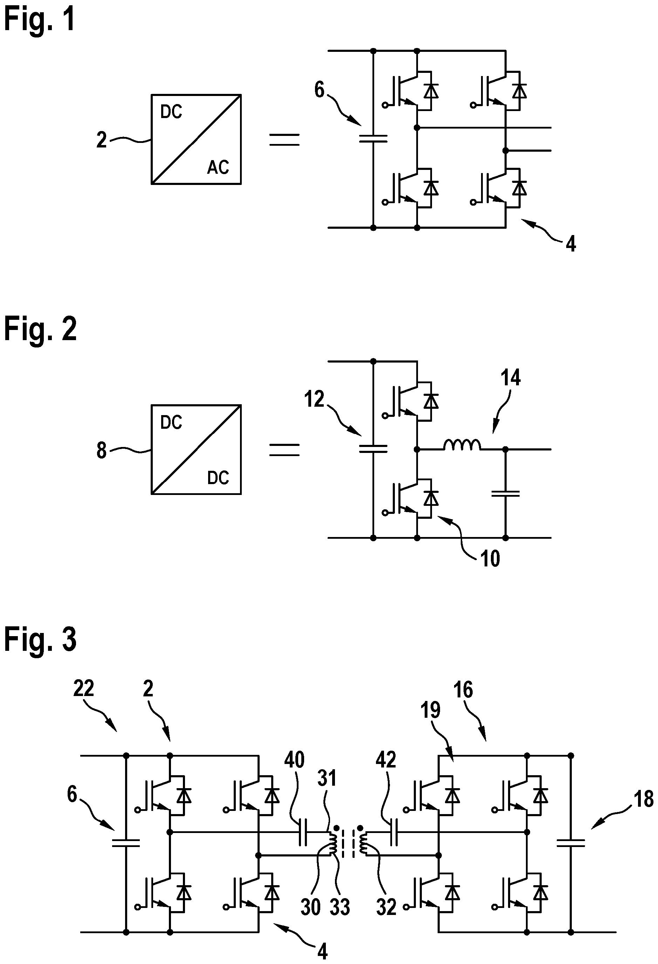

Fig. 1 shows an example of a DC/AC converter 2. In addition, figure 1 shows an internal structure of the DC/AC converter 2. The DC/AC converter 2 comprises a first semiconductor arrangement 4 and a first DC link 6. Such an DC/AC converter 2, its structure, and functionality are well known and widely used in the art and may be used in one or more of the converter arrangements 20 described below.

Fig. 2 shows an example of a DC/DC converter 8. In addition, figure 2 shows an internal structure of the DC/DC converter 8. The DC/DC converter 8 comprises a second semiconductor arrangement 10, a second DC link 12, and an output filter 14 including a capacitor and an inductance. Such an DC/DC converter 8, its structure, and functionality are well known and widely used in the art and may be used in one or more of the converter arrangements 20 described below.

Fig. 3 shows an example of a first electrical converter 22, in particular of an LLC. In addition, figure 3 shows an internal structure of the first electrical converter 22. The first electrical converter 22 comprises a DC/AC converter 2, e.g., as described with respect to figure 1, and an AC/DC converter 16 inductively coupled to the DC/AC converter 2. The AC/DC converter 16 comprises a third semiconductor arrangement 19 and a third DC link 18. Such an AC/DC converter 16, its structure, and functionality are well known and widely used in the art and may be used in one or more of the converter arrangements 20 described below.

The DC/AC converter 2 and the AC/DC converter 16 of the first electrical converter 22 may be inductively coupled to each other by a primary converter winding 30 and a secondary converter winding 32 of the first electrical converter 22. The DC/AC converter 2 may be electrically coupled to the primary converter winding 30 via a first resonance capacitor 40. The AC/DC converter 16 may be electrically coupled to the secondary converter winding 32 via a second resonance capacitor 42. The primary converter winding 30 may comprise a first end 31 and a second end 33, wherein the first end 31 of the primary converter winding 30 may be electrically coupled to the first resonance capacitor 40 and wherein the second end 33 of the primary converter winding 30 may face away from the first end 31.

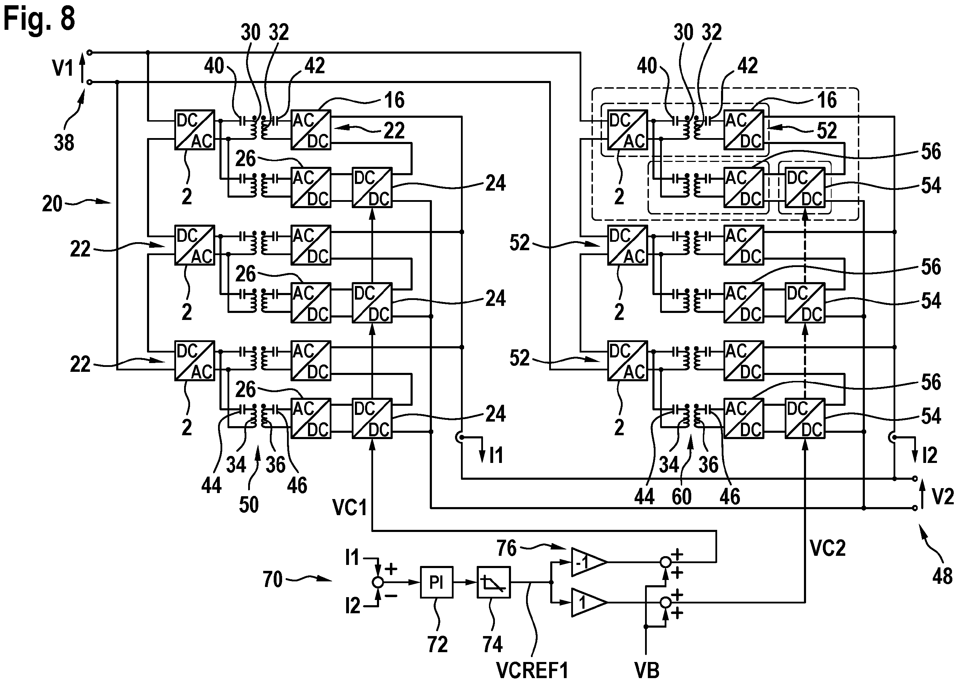

Such an electrical converter, its structure, and functionality are well known and widely used in the art and may be used in one or more of the converter arrangements 20 described below. In addition, a structure and/or functionality of any other electrical converter, e.g., a second electrical converter 52 (see figure 8), mentioned in this description may correspond to the structure and/or, respectively, functionality of the first electrical converter 22.

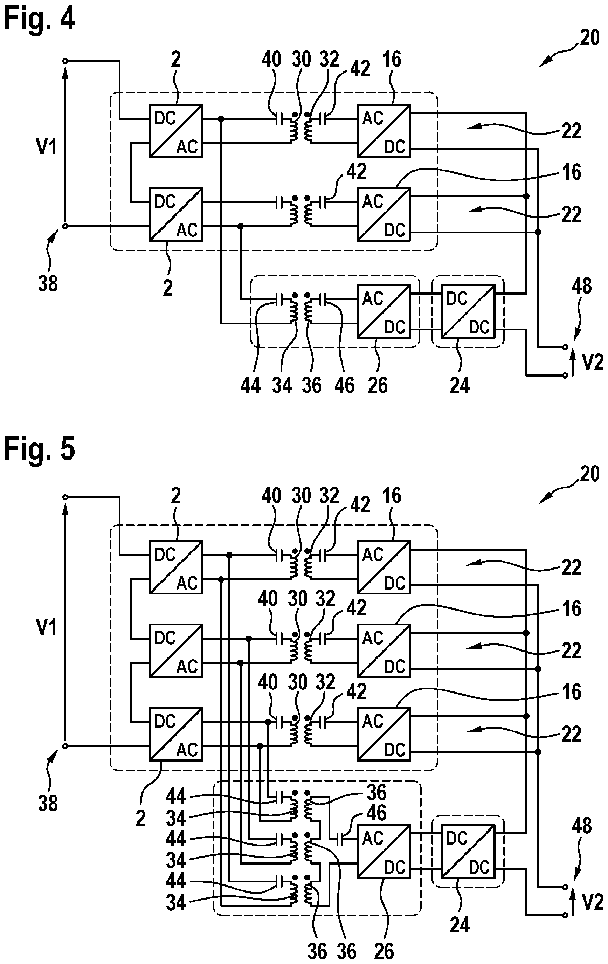

Fig. 4 shows a circuit diagram of a converter arrangement 20, in accordance with an embodiment of the present invention. The converter arrangement 20 is configured for converting a first DC bus voltage into a second DC bus voltage. The first DC bus voltage may be an input voltage of the converter arrangement 20 and the second DC bus voltage may be a total output voltage of the converter arrangement 20.

The converter arrangement 20 comprises an input connection 38, an output connection 48, exactly two first electrical converters 22, an auxiliary converter 24, and at least one first auxiliary voltage source 26.

The input connection 38 is configured for electrically coupling the converter arrangement 20 to an energy source (not shown). The energy source may be configured for providing the first DC bus voltage to the converter arrangement 20 via the input connection 38. The energy source may be a battery or a photovoltaic panel. The first DC bus voltage corresponds to a first DC bus voltage value V1, which may be measured at the input connection 38.

The output connection 48 is configured for electrically coupling the converter arrangement 20 to a load. The load may be configured for receiving the second DC bus voltage. The load may be a DC load, such as a DC motor, for example. The second DC bus voltage corresponds to a second DC bus voltage value V2, which may be measured at the output connection 48, e.g., by a voltmeter (not shown) electrically coupled to the output connection 48.

Each of the first electrical converters 22 may correspond to the first electrical converter 22 described with respect to figure 3. The first electrical converters 22 may be of the same type or may be of different types. For example, each of the first electrical converters 22 may be an LLC resonant converter, in short an "LLC converter". However, other converter topologies may also be used, e.g., dual-active bridge converters, forward converters, or flyback converters. The auxiliary voltage sources 26 each may be a buck converter and/or may comprise an AC/DC converter 16, for example as described with respect to figure 3.

The first electrical converters 22 are electrically coupled in series at their input terminals and are electrically coupled in parallel at their output terminals. So, the first electrical converters 22 from an ISOP branch, in other words an ISOP stack. Input terminals of the first electrical converters 22 are electrically arranged in series between different poles of the input connection 38. Output terminals of the first electrical converters 22 are electrically coupled to the output connection 48, wherein one pole of each of the first electrical converters 22 is directly coupled to the output connection 48, whereas the other pole of the first electrical converters 22 is indirectly coupled to the output connection 48 via the first auxiliary converter 24. So, the first auxiliary converter 24 is electrically coupled in series with the output terminals of the first electrical converters 22.

The first electrical converters 22 are electrically coupled in between the input connection 38 and the output connection 48. The first electrical converters 22 are configured for receiving the first DC bus voltage, for converting the first DC bus voltage into the second DC bus voltage and for providing the second DC bus voltage to the output connection 48. However, an actual first output voltage of each of the first electrical converters 22 may differ from the second DC bus voltage to be achieved by the corresponding first electrical converter 22.

The first auxiliary voltage source 26 is electrically coupled to the first auxiliary converter 24 for providing electric energy to the first auxiliary converter 24. The first auxiliary voltage source 26 may receive the corresponding energy from the first electrical converters 22. The first auxiliary voltage source 26 comprises at least one auxiliary winding, e.g., a primary auxiliary winding 34 and a secondary auxiliary winding 36. At least one of the auxiliary windings 34, 36, e.g., the primary auxiliary winding 34 is electrically coupled to the converter windings 30, 32 of each of the first electrical converters 22 for receiving the electric energy from the first electrical converters 22. The primary auxiliary winding 34 may be coupled to one of the converter windings 30 via a first auxiliary resonance capacitor 44. The secondary auxiliary winding 36 may be electrically coupled to the first auxiliary voltage source via a second auxiliary resonance capacitor 46.

Each of the converter windings 30, 32, in particular each of the primary converter windings 30, has the corresponding first end 31 and the corresponding second end 33. When the converter arrangement 20 comprises exactly two of the first electrical converters 22 and exactly the one first auxiliary voltage source 26, the first end 31 of the primary auxiliary winding 34 of the first auxiliary voltage source 26 is electrically coupled to the first end 31 of the primary converter winding 30 of one of the first electrical converters 22 and a second end of the primary auxiliary winding 34 may be electrically coupled to the second end 33 of the primary converter windings 30 of the other one of the first electrical converters 22. So, a structure of the auxiliary voltage source 26 may be kept simple in the case of the exactly two series connected converters 22 per ISOP branch. In particular, only a single auxiliary voltage source 26 is required in this case, which may be connected to bridge terminals, i.e. the first and second ends 31, 33 of the converter windings 30, 32 of the two first electrical converters 22.

The first auxiliary converter 24 may be configured for adding a first compensation voltage to the first output voltage actually generated by the first electrical converters 22, as described further below. The first output voltages actually generated by the first electrical converters 22 may be referred to as first output voltages and as such may correspond to the actual first output voltages mentioned above.

In the embodiment shown in figure 4 and described in the foregoing, which may be referred to as first embodiment in the following, the first DC bus voltage which represents the total input voltage of the converter arrangement 20 is applied to that side of the first electrical converters 22 at which the first auxiliary voltage source 26 is not arranged, whereas the second DC bus voltage which represents the total output voltage of the converter arrangement 20 is generated at that side of the first electrical converters 22 at which the first auxiliary voltage source 26 is arranged. So, the first auxiliary voltage source 26 is arranged between the output terminals of the first electrical converters 22 and the output connection 48. As described above, in this first embodiment, the auxiliary voltage source 26 is configured such that it is able to add the corresponding compensation voltage to the to the output voltage generated by the first electrical converters 22.

However, in an alternative embodiment which is not shown in the figures and which may be referred to as second embodiment in the following, the first DC bus voltage may be applied to that side of the first electrical converters 22 at which the first auxiliary voltage source 26 is arranged, whereas the second DC bus voltage is generated at that side of the first electrical converters 22 at which the first auxiliary voltage source 26 is not arranged. In this second embodiment, the structure of the converter arrangement 20 may correspond to the structure of the converter arrangement 20 shown in figure 4, wherein only the sides to which the total input voltage is applied and at which the total output voltage is generated are switched. So, in the second embodiment in figure 4 the input connection 38 and the output connection 48 would be interconverted such that the first auxiliary voltage source 26 would be arranged between the input terminals of the first electrical converters 22 and the input connection 38. Further, in this alternative embodiment, the first auxiliary voltage source 26 is configured such that it is able to add the corresponding compensation voltage to the first DC bus voltage applied to the first electrical converters 22.

Fig. 5 shows a circuit diagram of a converter arrangement 20, in accordance with an embodiment of the present invention. The converter arrangement 20 shown in figure 5 may widely correspond to the converter arrangement 20 described with respect to figure 4. Therefore, in order to provide a concise description and to avoid unnecessary repetitions, only those features of the converter arrangement 20 shown in figure 5 are described in the following in which the converter arrangement 20 shown in figure 5 differs from the converter arrangement described with respect to figure 4.

When the converter arrangement 20 comprises exactly the one first auxiliary voltage source 26, as in the embodiment shown in figure 5, the first auxiliary voltage source 26 may comprise at least one dedicated auxiliary winding 34, 36, e.g., one dedicated primary auxiliary winding 34, for each of the first electrical converters 22. In particular, each of the primary auxiliary windings 34 may be electrically coupled to the converter winding 30, 32, e.g., the primary converter winding 30, of the corresponding first electrical converter 22.

In general, the converter arrangement 20 may comprise two or more, e.g., N, first electrical converters 22 forming an ISOP branch between the input connection 38 and the output connection 48, with N being a natural number. In this case, the first auxiliary voltage source 26 may comprise at least N of the primary auxiliary windings 34, wherein each of these primary auxiliary windings 34 is electrically coupled to a corresponding one of the primary converter windings 30.

In the embodiment shown in figure 5 and described in the foregoing, the first DC bus voltage which represents the total input voltage of the converter arrangement 20 is applied to that side of the first electrical converters 22 at which the first auxiliary voltage source 26 is not arranged, whereas the second DC bus voltage which represents the total output voltage of the converter arrangement 20 is generated at that side of the first electrical converters 22 at which the first auxiliary voltage source 26 is arranged, similar to the first embodiment described with respect to figure 4. However, in an alternative embodiment which is not shown in the figures, the first DC bus voltage may be applied to that side of the first electrical converters 22 at which the first auxiliary voltage source 26 is arranged, whereas the second DC bus voltage is generated at that side of the first electrical converters 22 at which the first auxiliary voltage source 26 is not arranged, similar to the second embodiment described with respect to figure 4. So, in the alternative embodiment of figure 5 the input connection 38 and the output connection 48 would be interconverted such that the first auxiliary voltage source 26 would be arranged between the input terminals of the first electrical converters 22 and the input connection 38. Further, in this alternative embodiment, the first auxiliary voltage source 26 is configured such that it is able to add the corresponding compensation voltage to the first DC bus voltage applied to the first electrical converters 22.

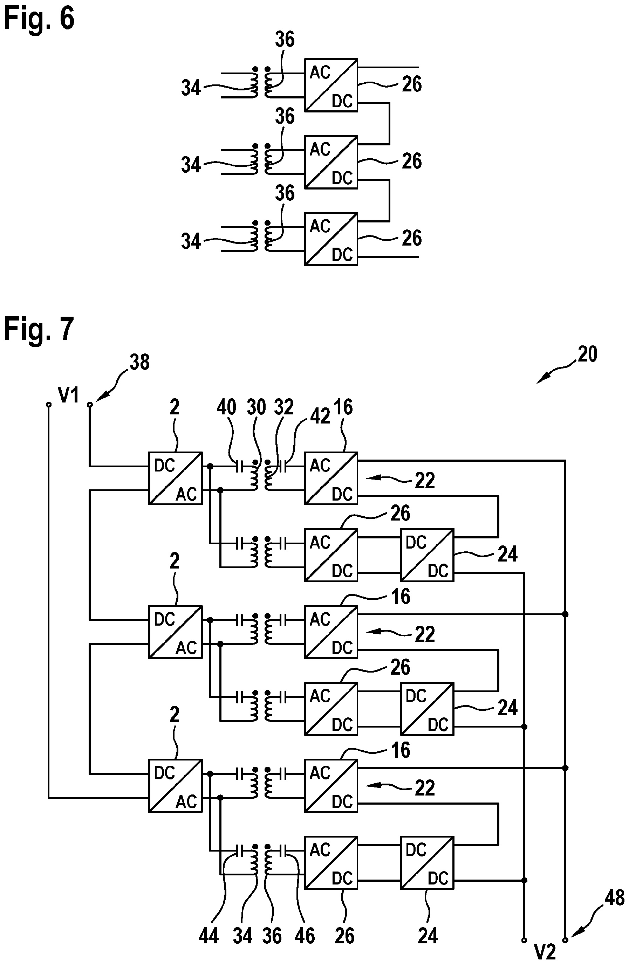

Fig. 6 shows a detailed view of an alternative to the converter arrangement 20 described with respect to figure 5, in accordance with an embodiment of the present invention. In particular, instead of electrically coupling the one first auxiliary converter 24 to the one first auxiliary voltage source 26 and the one first auxiliary voltage source 26 via three pairs of auxiliary windings 34, 36 to the corresponding converter windings 30, 32, the one first auxiliary converter 24 may be electrically coupled to three first auxiliary voltage sources 26 each having a pair of auxiliary windings 34, 36 which may be coupled to the corresponding converter windings 30, 32. The first auxiliary voltage sources 26 may be electrically arranged in series. The rest of the converter arrangement 20 may correspond to the converter arrangement described with respect to figure 5.

Fig. 7 shows a circuit diagram of a converter arrangement, in accordance with an embodiment of the present invention. The converter arrangement 20 shown in figure 7 may widely correspond to one of the converter arrangements 20 described with respect to figures 5 and 6. Therefore, in order to provide a concise description and to avoid unnecessary repetitions, only those features of the converter arrangement 20 shown in figure 7 are described in the following in which the converter arrangement 20 shown in figure 7 differs from the converter arrangements 20 described with respect to figures 5 and 6.

The converter arrangement 20 may comprise at least one first auxiliary converter 24 for each of the first electrical converters 22. The first auxiliary converters 24 are electrically arranged in series between the output terminals of the corresponding first electrical converters 22 and the output connection 48. Thus, each of the first electrical converters 22 has its own first auxiliary converter 24.

The converter arrangement 20 may comprise at least one first auxiliary voltage source 26 for each of the first auxiliary converters 24. The first auxiliary voltage sources 26 are electrically coupled to the corresponding first auxiliary converters 24 for providing electric energy to the corresponding first auxiliary converters 24. Each of the first auxiliary voltage sources 26 may comprise at least one of the auxiliary windings 34, 36. The auxiliary windings 34, 36 may be electrically coupled to the converter windings 30, 32 of the corresponding first electrical converters 22 for receiving the electric energy from the first electrical converters 22.

In the embodiment shown in figure 7 and described in the foregoing, the first DC bus voltage which represents the total input voltage of the converter arrangement 20 is applied to that side of the first electrical converters 22 at which the first auxiliary voltage sources 26 are not arranged, whereas the second DC bus voltage which represents the total output voltage of the converter arrangement 20 is generated at that side of the first electrical converters 22 at which the first auxiliary voltage sources 26 are arranged, similar to the first embodiment described with respect to figure 4. However, in an alternative embodiment which is not shown in the figures, the first DC bus voltage may be applied to that side of the first electrical converters 22 at which the first auxiliary voltage sources 26 are arranged, whereas the second DC bus voltage is generated at that side of the first electrical converters 22 at which the first auxiliary voltage source 26s are not arranged, similar to the second embodiment described with respect to figure 4. So, in the alternative embodiment of figure 7 the input connection 38 and the output connection 48 would be interconverted such that the first auxiliary voltage sources 26 would be arranged between the input terminals of the first electrical converters 22 and the input connection 38. Further, in this alternative embodiment, the first auxiliary voltage sources 26 are configured such that they are able to add the corresponding compensation voltages to the first DC bus voltage applied to the first electrical converters 22.

Fig. 8 shows a circuit diagram of a converter arrangement 20 and of a controller, in particular a first controller 70, for operating the converter arrangement 20, in accordance with an embodiment of the present invention. The converter arrangement 20 comprises a first branch 50 of first electrical converters 22 and a second branch 60 of second electrical converters 52. The first branch 50 of first electrical converters 22 may correspond to the converter arrangement 20 described with respect to figure 7. A structure and functionality of the second branch 60 of the second electrical converters 52 may correspond to the structure and, respectively, functionality of the first branch 50 of the first electrical converters 22. In particular, structures and functionalities of the second electrical converters of 52 may correspond to the structures and functionalities of the first electrical converters 22.

The first electrical converters 22, the first auxiliary converters 24, and the first auxiliary voltage sources 26 form the first branch 50 of the converter arrangement 20. The second branch 60 is electrically arranged in parallel to the first branch 50. The second branch 60 has two or more of the second electrical converters 52, the second electrical converters 54, and second auxiliary voltage sources 56. Each of the second electrical converters 52 has a corresponding input terminal and corresponding output terminal. The input terminals of the second electrical converters 52 are electrically coupled to each other in series between the first pole of the input connection 38 and the second pole of the input connection 38. The output terminals of the second electrical converters 52 are electrically coupled to the output connection 48 in parallel. So, the second branch 60 may be referred to as ISOP branch or ISOP stack. The second auxiliary converters 54 are electrically arranged in series between the output terminals of the corresponding second electrical converters 52 and the output connection 48.

The first controller 70 may receive a first current value I1 being representative of a first current through the first branch 50. The first current value I1 may be generated by a current sensor (not shown) measuring the first current at the serial connected output terminals of the first electrical converters 22. Then, the first current value I1 may be transferred to the first controller 70.

The first controller 70 may receive a second current value I2 being representative of a second current through the second branch 60. The second current value I2 may be generated by another current sensor (not shown) measuring the second current at the serial connected output terminals of the second electrical converters 52. Then, the second current value I2 may be transferred to the first controller 70. The first controller 70 may receive the first and second current values 11, I2 simultaneously or one after the other.

Then, the first controller 70 may determine a difference between the first and second current values I1, I2. In particular, the first controller 70 may subtract the second current value I2 from the first current value I1 to determine the difference. The difference between the first and second current values I1, I2 may be further processed by a first PI controller 72.

Then, the first controller 70 may determine a first compensation voltage value VC1 depending on the difference between the first and second current values I1, I2 such that the first current corresponds to the second current when the first compensation voltage corresponding to the first compensation value VC1 is added to the first output voltage generated by the first electrical converters 22.

The first compensation voltage value VC1 may be determined depending on the difference between the first and second current values I1, I2 by determining a first compensation voltage reference value VCREF 1 depending on the difference and by adding a predetermined bias voltage value VB to the first compensation voltage reference value VCREF1, wherein the first compensation voltage value VC1 may correspond to the sum of the first compensation voltage reference value VCREF1 and the bias voltage value VB. The bias voltage value VB may correspond to a half of a DC link voltage resulting over the capacitor of the second DC link 12 of the corresponding auxiliary converter 24, 54 in order to achieve a symmetrical control of the corresponding auxiliary converter 24, 54 around a centre of its voltage range. This may be done to avoid a saturation in case of negative compensation voltages, for example.

The first compensation voltage reference value VCREF 1 may be determined from the output of the first PI controller 72, e.g. by a first lowpass filter 74. Before modifying the first compensation voltage reference value VCREF 1 by the bias voltage value VB, the first compensation voltage reference value VCREF1 may be forwarded via the two different paths, e.g., by a splitting stage 76, wherein in one of these paths the sign of the first compensation voltage reference value VCREF 1 may be changed.

When the converter arrangement 20 comprises the second auxiliary converters 54 electrically arranged in series with the corresponding second electrical converters 52, as in the embodiment shown in figure 8, the first controller 70 may determine a second compensation voltage value VC2 depending on the difference between the first and second current values I1, I2 such that the first current corresponds to the second current when the second compensation voltage corresponding to the second compensation voltage value VC2 is added to the second output voltage generated by the second electrical converters 54. The second compensation voltage value VC2 may be determined in a similar way as the first compensation voltage value VC1 explained above, e.g., by determining the first compensation voltage reference value VCREF 1, and optionally by adding the bias voltage value VB to the first compensation voltage reference value VCREF1, wherein the first compensation voltage reference value VCREF1 may be forwarded to the second auxiliary converters 54 by the splitting stage 76 such that the sign of the first compensation voltage reference value VCREF1 in one of the paths is different from the sign of the first compensation voltage reference value VCREF 1 in the other path.

Then, the first controller 70 may generate and may send a first compensation signal to the first auxiliary converters 24, wherein each of the first auxiliary converters 24 is configured to add the first compensation voltage corresponding to the first compensation voltage value VC1 to the first output voltage generated by the corresponding first electrical converter 22 upon receiving the first compensation signal. In case of the second auxiliary converters 54 being present, the first controller 70 may generate and send a second compensation signal to the second auxiliary converters 54, wherein the second auxiliary converters 54 are configured to add the second compensation voltage to the second output voltage generated by the corresponding second electrical converters 52 upon receiving the second compensation signal.

The first compensation signal may be generated depending on the first compensation voltage value VC1, e.g., by a first modulator (not shown) of the controller 70, e.g., by a first PWM-modulator, as it is known in the art. The second compensation signal may be generated depending on the second compensation voltage value VC2, e.g., by a second modulator (not shown) of the first controller 70, e.g., by a second PWM-modulator, as it is known in the art. The first compensation signal may be used to control one or more semiconductor switches of the first auxiliary converters 24. The second compensation signal may be used to control one or more semiconductor switches of the second auxiliary voltage sources 54.

So, the first controller 70 is configured for operating the converter arrangement 20. To this end, the first controller 70 comprises a memory (not shown) for storing one or more current values and/or one or more voltage values and a processor (not shown) communicatively coupled to the memory and being configured for carrying out the method as described in the foregoing based on the one or more current values and/or one or more voltage values, respectively. The one or more current values may be at least one of the first current value I1, the second current value I2, and the difference between the first and second current values I1, I2. The one or more voltage values may be at least one of the first compensation voltage value VC1, the second compensation voltage value VC2, the first compensation voltage reference value VCREF1, the bias voltage value VB, and the sum of the first compensation voltage reference value VCREF1 and the bias voltage value VB. The controller 70 may carry out a computer program for operating the converter arrangement 20. The computer program may comprise computer-readable instructions which, when being executed by the processor of the first controller 70, carry out the control method as described in the foregoing. The computer program may be stored on a computer-readable medium, e.g., on the memory of the first controller 70.

The first controller 70 shown in figure 8 and its function are described with respect to the embodiment of the converter arrangement 20 having at least two branches 50, 60, wherein each branch 50, 60 is configured in accordance with the converter arrangement 20 described with respect to figure 7. However, the first controller 70 shown in figure 8 and its function can easily be transferred to an embodiment of the converter arrangement 20 having two or more of the branches 50, 60, wherein each branch 50, 60 is configured in accordance with the converter arrangement 20 described with respect to figure 5.

The first controller 70 shown in figure 8 and its function are described with respect to an embodiment of the converter arrangement 20 in which the total output voltage is generated at that side of the converter arrangement 20 in which the auxiliary converters 24, 54 are arranged, i.e., the right side of figure 8, and the compensation voltages are added to the output voltages of the electrical converters 22, 52. However, the controller 70 shown in figure 8 and its function can easily be transferred to an embodiment of the converter arrangement 20 in which the input voltage is applied at that side of the converter arrangement 20 at which the auxiliary converters 24, 54 are arranged and the compensation voltages are added to the first DC bus voltage, i.e., the total input voltage, applied to the electrical converters 22, 52, similar to the alternative embodiments described with respect to figures 4, 5, and 7.

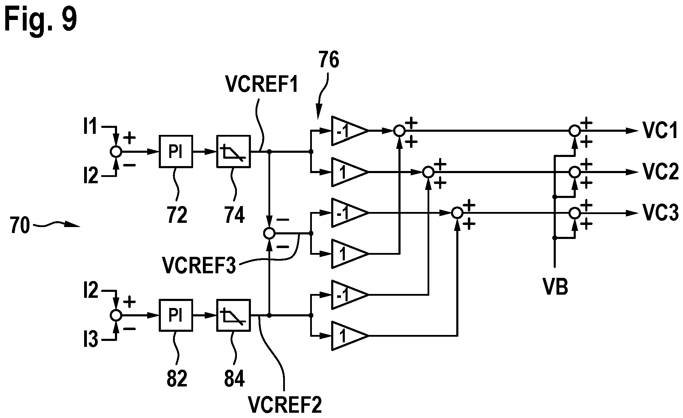

Fig. 9 shows a detailed view of an alternative to the first controller 70 of the converter arrangement 20 of figure 8, in accordance with an embodiment of the present invention. The first controller 70 shown in figure 9 at least in part may correspond to the first controller 70 described with respect to figure 8. Therefore, only those features of the first controller 70 shown in figure 9 are explained in the following, in which the controller 70 of figure 9 differs from the controller 70 described with respect to figure 8.

The first controller 70 may be configured for operating a converter arrangement 20 basically corresponding to the converter arrangement 20 described with respect to figure 8 but having three ISOP branches instead of having only the two ISOP branches 50, 60. A structure and functionality of the third branch (not shown) may correspond to the structure and functionality of the first and/or second branch 50, 60. The third branch may be arranged electrically in parallel to the first and second branches 50, 60.

A third compensation voltage reference value VCREF3 may be determined depending on the first compensation voltage reference value VCREF 1 and on a second compensation voltage reference value VCREF2. For example, the third compensation voltage reference value VCREF3 may correspond to a difference between the first compensation voltage reference value VCREF1 and the second compensation voltage reference value VCREF2.

The second compensation voltage reference value VCREF2 may be determined in a similar way as the first compensation voltage reference value VCREF1, e.g., by determining a difference between the second current value I2 and a third current value I3. The third current value I3 represents a third current through the third branch and may be generated by a current sensor (not shown) electrically coupled to the output terminals of the electrical converters of the third branch. The difference between the second current value I2 and the third current value I3 may be further processed by a second PI controller 82 and by a second lowpass filter 84 to achieve the second compensation voltage reference value VCREF2.

The splitting stage 76 comprises three sections, i.e., a first section for forwarding the first compensation voltage reference value VCREF1, a second section for forwarding the second compensation voltage reference value VCREF2, and a third section for forwarding the third compensation voltage reference value VCREF3. Each of these sections may have two paths, wherein in each of the sections the corresponding compensation voltage reference value VCREF 1, VCREF2, VCREF3 is forwarded in one of the corresponding paths with a different sign than in the other one of the corresponding paths.

A general rule for forwarding and combining the compensation voltage reference values VCREF1, VCREF2, VCREF3 may be based on the principle to add two of the compensation voltage reference values VCREF1, VCREF2, VCREF3 generated by the corresponding PI controller 72, 82 that acts on the corresponding current difference to their neighbours. In particular, considering a case with N paralleled branches 50, 60, N currents through the corresponding electrical converters 22, 52 are measured. Then, the differences between these currents and the currents of their neighbours are determined, i.e., the differences $I_{diff,k} = I_{k} - I_{k+1}$, with k being a natural number ranging from 1 to N and with $I_{N+1} = I_{1}$ to make this definition cyclic. On each of these differences the corresponding PI controller 72, 82 may act to generate the compensation voltage reference $VCREF_{k} = PI\ controller(I_{diff,k})$. Then, the compensation signal $VC_{k}$ for each auxiliary converter 24, 54 may be determined by $VC_{k} = VCREF_{k-1} - VCREF_{k}$. Assuming linearity of the PI controllers 72, 82, each compensation signal $VC_{k}$ depends on the following sum of currents:

$$-2*I_{k} + I_{k-1} + I_{k+1},$$

so its "own" current negative twice and the neighboring currents positive and once, with $I_{0} = I_{N}$ and $I_{N+1} = I_{1}$ to make it cyclic, as mentioned above.

In particular, the third current reference value VCREF3 having a positive sign may be added to the first current reference value VCREF 1 having a negative sign. The second current reference value VCREF2 having a negative sign may be added to the first current reference value VCREF1 having a positive sign. The second current reference value VCREF2 having a positive sign may be added to the third current reference value VCREF3 having a negative sign. Then, the results may be modified by adding the bias voltage value VB to the results, e.g., as explained with respect to figure 8.

In particular, the first compensation voltage value VC1 may correspond to the modified sum of the negative first current reference value VCREF 1 and the third current reference value VCREF3. The second compensation voltage value VC2 may correspond to the modified sum of the negative second current reference value VCREF2 and the first current reference value VCREF 1. The third compensation voltage value VC3 may correspond to the modified sum of the negative third current reference value VCREF3 and the second current reference value VCREF2.

A third compensation signal may be generated depending on the third compensation voltage value VC3, e.g., by a third modulator (not shown) of the controller 70, e.g., by a third PWM-modulator, as it is known in the art. The third compensation signal may be used to control one or more semiconductor switches of the third auxiliary converters of the third branch. The first controller 70 may send the third compensation signal to the third auxiliary converters, wherein each of the third auxiliary converters is configured to add the third compensation voltage corresponding to the third compensation voltage value VC3 to the third output voltage generated by the corresponding third electrical converter upon receiving the first compensation signal.

The first controller 70 shown in figure 9 and its function are described with respect to an embodiment of the converter arrangement 20 having two or more branches 50, 60, with each branch 50, 60 being configured as described with respect to figure 7. However, the first controller 70 shown in figure 9 and its function can easily be transferred to the embodiment of the converter arrangement 20 having two or more branches 50, 60, with each branch 50, 60 being configured as described with respect to figure 5.

It has to be mentioned that the control structure explained in the foregoing is independent of the number of electrical converters 22, 52 of each branch 50, 60 since the auxiliary converters 24, 54 of each branch 50, 60 are controlled by the same compensation voltage value VCi (with i = 1, ..., $N_{branch}$). Active balancing between the converters within each branch is not required as the inherent balancing of the ISOP structure guarantees equal load sharing within the branches.

If only load current balancing has to be guaranteed, the auxiliary converters 24, 54 may be implemented with low voltage semiconductor devices and very low output power, thereby ensuring low losses, small volume and low costs.

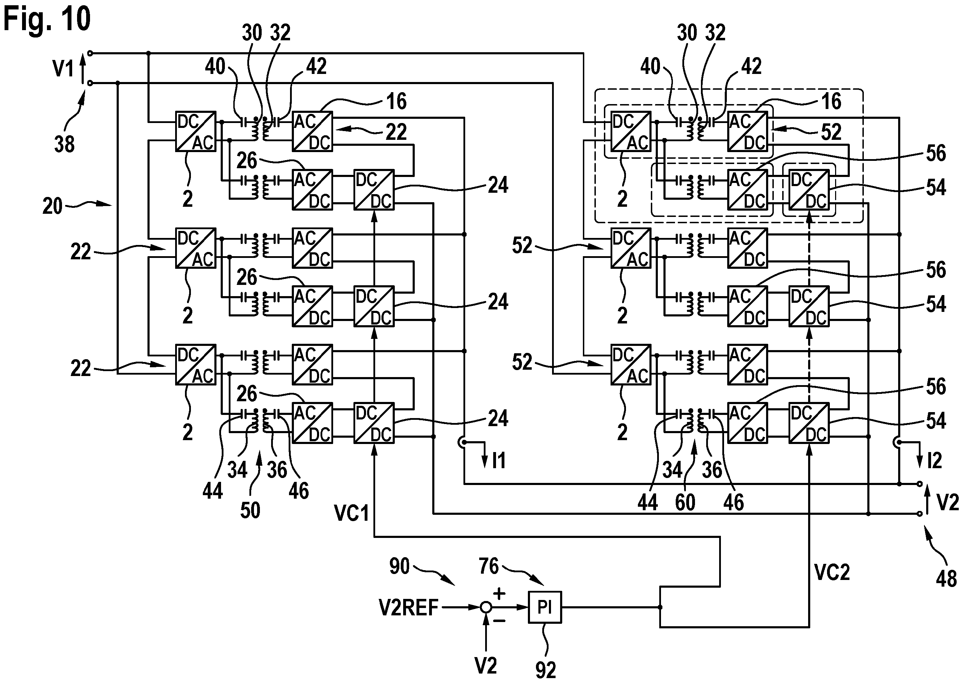

Fig. 10 shows a circuit diagram of the converter arrangement 20 and of a controller, in particular a second controller 90, for operating the converter arrangement 20, in accordance with an embodiment of the present invention. The converter arrangement 20 shown in figure 10 may widely correspond to the converter arrangement described with respect to figure 8, except for the second controller 90. The second controller 90 may be arranged as an alternative or in addition to the first controller 70. Optionally, the first and second controller 70, 90 may be implemented within a common control unit. The second controller 90 may be configured to regulate the second DC bus voltage to a second DC bus voltage reference value V2REF. The second DC bus voltage reference value V2REF may be provided by an external device, e.g., by the load and/or by a controller for controlling the load.

To this end, the second controller 90 may receive the second DC bus voltage value V2 corresponding to the actual total output voltage of the converter arrangement 20. The actual output voltage may be measured, e.g., by the voltmeter mentioned above, and may be transferred to the second controller 90.

The second controller 90 may determine a difference between the second DC bus voltage value V2 and the second DC bus voltage reference value V2REF. The first auxiliary converters 24 and the second auxiliary converters 54 may be controlled depending on the difference between the second DC bus voltage value V2 and the second DC bus voltage reference value V2REF such that the actual total output voltage corresponds to the second DC bus voltage reference value V2REF to be supplied by the converter arrangement 20 by determining first and second control signals depending on the difference between the second DC bus voltage value V2 and the second DC bus voltage reference value V2REF and by sending the first control signal to the first auxiliary converters 24 and by sending the second control signal to the second auxiliary converters 54, optionally in addition to the corresponding compensation signals.

For example, the difference between the second DC bus voltage value V2 and the second DC bus voltage reference value V2REF may be further processed by a third PI controller 92. An output of the third PI controller 90 may be interpreted as current reference values, which may be fed into the auxiliary converters 24, 54. For example, the outputs of the third PI controller may be used to generate the first and second control signals, e.g., by corresponding modulators (not shown), e.g., PWM-modulators, as compensatory actions.

The embodiment of the second controller 90 shown in figure 10 is described with respect to the converter arrangement 20 comprising the two branches 50, 60, with each of the branches 50, 60 being configured in correspondence with the converter arrangement described with respect to figure 7. However, this concept may be transferred easily to the embodiment of the converter arrangement 20 having the branches 50, 60 each being configured as shown in figure 5, or to an embodiment of the converter arrangement 20 having three or more branches 50, 60 of electrically converters 22, 52.

While the invention has been illustrated and described in detail in the drawings and foregoing description, such

# EP 4 693 855 A1

illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| DC/AC converter | 2 |
| First semiconductor arrangement | 4 |
| First DC link | 6 |
| DC/DC converter | 8 |
| Second semiconductor arrangement | 10 |
| Second DC link | 12 |
| Output filter | 14 |
| AC/DC converter | 16 |
| Third DC link | 18 |
| Third semiconductor arrangement | 19 |
| Converter arrangement | 20 |
| First electrical converter | 22 |
| First auxiliary converter | 24 |
| First auxiliary voltage source | 26 |
| Primary converter winding | 30 |
| First end | 31 |
| Secondary converter winding | 32 |
| Second end | 33 |
| Primary auxiliary winding | 34 |
| Secondary auxiliary winding | 36 |
| Input connection | 38 |
| First resonance capacitor | 40 |
| Second resonance capacitor | 42 |
| First auxiliary resonance capacitor | 44 |
| Second auxiliary resonance capacitor | 46 |
| Output connection | 48 |
| First branch | 50 |
| Second electrical converter | 52 |
| Second auxiliary converter | 54 |
| Second auxiliary voltage source | 56 |
| Second branch | 60 |
| First controller | 70 |
| First PI controller | 72 |
| First lowpass filter | 74 |
| Splitting stage | 76 |
| Second controller | 80 |
| Second PI controller | 82 |
| Second lowpass filter | 84 |
| Second controller | 90 |
| Third PI controller | 92 |
| First DC bus voltage value | V1 |
| Second DC bus voltage value | V2 |
| Second DC bus voltage reference value | V2REF |

(continued)

| Bias voltage value | VB |
|---|---|
| First compensation voltage value | VC1 |
| Second compensation voltage value | VC2 |
| Third compensation voltage value | VC3 |
| First compensation voltage reference value | VCREF1 |
| Second compensation voltage reference value | VCREF2 |
| Third compensation voltage reference value | VCREF3 |
| First current value | I1 |
| Second current value | I2 |

**Claims**

1. Converter arrangement (20) for converting a first DC bus voltage into a second DC bus voltage, the converter arrangement (20) comprising:

   an input connection (38) for electrically coupling the converter arrangement (20) to an energy source, wherein the energy source is configured for providing the first DC bus voltage;
   an output connection (48) for electrically coupling the converter arrangement (20) to a load, wherein the load is configured for receiving the second DC bus voltage;
   two or more first electrical converters (22) each having a corresponding input terminal and a corresponding output terminal, wherein the input terminals of the first electrical converters (22) are electrically coupled to each other in series between a first pole of the input connection (38) and a second pole of the input connection (38) and wherein the output terminals of the first electrical converters (22) are electrically coupled to the output connection (48) in parallel; and
   at least one first auxiliary converter (24) electrically arranged in series between the output terminal of at least one of the first electrical converters (22) and the output connection (48) or between the input terminal of at least one of the first electrical converters (22) and the input connection (38).

2. Converter arrangement (20) according to claim 1, comprising:
   at least one first auxiliary voltage source (26) electrically coupled to the first auxiliary converter (24) for providing electric energy to the first auxiliary converter (24), wherein the first auxiliary voltage source (26) comprises at least one auxiliary winding (34, 36), wherein each of the first electrical converters (22) comprises at least one converter winding (30, 32) for converting the first DC bus voltage into the second DC voltage, and wherein the auxiliary winding (34, 36) is electrically coupled to the converter windings (30, 32) of each of the first electrical converters (22) for receiving the electric energy from the first electrical converters (22).

3. Converter arrangement (20) according to claim 2, wherein

   each of the converter windings (30, 32) has a first end (31) and a second end (33), and,
   when the converter arrangement (20) comprises exactly two of the first electrical converters (22) and exactly the one first auxiliary voltage source (26), a first end of the auxiliary winding (34, 36) of the first auxiliary voltage source (26) is electrically coupled to the first end (31) of one of the first electrical converters (22) and a second end of the auxiliary winding (34, 36) is electrically coupled to the second end (33) of the other one of the first electrical converters (22).

4. Converter arrangement (20) according to claim 2, wherein
   when the converter arrangement (20) comprises exactly the one first auxiliary voltage source (26), the first auxiliary voltage source (26) comprises one dedicated auxiliary winding (34, 36) for each of the first electrical converters (22), wherein each of the auxiliary windings (34, 36) is electrically coupled to the converter winding (30, 32) of the corresponding first electrical converter (22).

5. Converter arrangement (20) according to claim 1 or 2, comprising:
   one dedicated first auxiliary voltage source (26) for each of the first electrical converters (22), wherein each first auxiliary voltage source (26) is electrically coupled to the first auxiliary converter (24) for providing electric energy to the first auxiliary converter (24), wherein each of the first auxiliary voltage sources (26) comprises at least one auxiliary winding (34, 36), wherein the auxiliary windings (34, 36) are electrically coupled to the converter windings (30, 32) of the corresponding first electrical converter (22) for receiving electric energy from the corresponding first electrical converter (22).

6. Converter arrangement (20) according to one of the preceding claims, wherein

the first electrical converters (22), the first auxiliary converters (24), and the first auxiliary voltage sources (26) form a first branch (50) of the converter arrangement (20),
the converter arrangement (20) comprises a second branch (60) being electrically arranged in parallel to the first branch (50) and having two or more second electrical converters (52) each having a corresponding input terminal and a corresponding output terminal, wherein the input terminals of the second electrical converters (52) are electrically coupled to each other in series between the first pole of the input connection (38) and the second pole of the input connection (38) and wherein the output terminals of the second electrical converters (52) are electrically coupled to the output connection (48) in parallel; and
at least one second auxiliary converter (54) electrically arranged in series between the output terminals of the second electrical converters (52) and the output connection (48).

7. Converter arrangement (20) according to claim 1, comprising:
at least one first auxiliary converter (24) for each of the first electrical converters (22), wherein the first auxiliary converters (24) are electrically arranged in series between the output terminals of the corresponding first electrical converters (22) and the output connection (48).

8. Converter arrangement (20) according to claim 7, comprising:
at least one first auxiliary voltage source (26) for each of the first auxiliary converters (24), wherein the first auxiliary voltage sources (26) are electrically coupled to the corresponding first auxiliary converters (24) for providing electric energy to the corresponding first auxiliary converters (24), wherein each of the first auxiliary voltage sources (26) comprises at least one auxiliary winding (34, 36), wherein each of the first electrical converters (22) comprises at least one converter winding (30, 32) for converting the first DC bus voltage into the second DC voltage, and wherein the auxiliary windings (34, 36) are electrically coupled to the converter windings (30, 32) of the corresponding first electrical converters (22) for receiving the electric energy from the first electrical converters (22).

9. Converter arrangement (20) according to claim 8, wherein

the first electrical converters (22), the first auxiliary converters (24), and the first auxiliary voltage sources (26) form a first branch (50) of the converter arrangement (20),
the converter arrangement (20) comprises a second branch (60) being electrically arranged in parallel to the first branch (50) and having two or more second electrical converters (52) each having a corresponding input terminal and a corresponding output terminal, wherein the input terminals of the second electrical converters (52) are electrically coupled to each other in series between the first pole of the input connection (38) and the second pole of the input connection (38) and wherein the output terminals of the second electrical converters (52) are electrically coupled to the output connection (48) in parallel; and
at least one second auxiliary converter (54) for each of the second electrical converters (52), wherein the second auxiliary converters (54) are electrically arranged in series between the output terminals of the corresponding second electrical converters (52) and the output connection (48).

10. Method for operating a converter arrangement (20), the converter arrangement (20) being configured for converting a first DC bus voltage into a second DC bus voltage and comprising a first branch (50) of first electrical converters (22) which are electrically connected to each other in series at their input terminals and in parallel at their output terminals, and a second branch (60) of second electrical converters (52) which are electrically connected to each other in series at their input terminals and in parallel at their output terminals, wherein the second branch (60) is electrically arranged in parallel to the first branch (50), wherein for each of the first electrical converters (22) at least one first auxiliary converter (24) is electrically arranged in series with the corresponding first electrical converter (22), and wherein for each of the second electrical converters (52) a corresponding second auxiliary converter (54) is electrically arranged in series with the corresponding second electrical converter (52), the method comprising:

receiving a first current value (I1) being representative of a first current through the first branch (50);
receiving a second current value (I2) being representative of a second current through the second branch (60);

determining a difference between the first and second current values (I1, I2);
determining a first compensation voltage value (VC1) depending on the difference such that the first current (I1) corresponds to the second current (I2) when a first compensation voltage corresponding to the first compensation voltage value (VC1) is added to each first output voltage generated by the first electrical converters (22); and determining a second compensation voltage value (VC2) depending on the difference such that the first current (I1) corresponds to the second current (I2) when a second compensation voltage corresponding to the second compensation voltage value (VC2) is added to each second output voltage generated by the second electrical converters (52);
sending a first compensation signal to the first auxiliary converter (24), wherein the first auxiliary converters (24) are configured to add the first compensation voltage to the first output voltages generated by the corresponding first electrical converters (22) upon receiving the first compensation signal; and
sending a second compensation signal to the second auxiliary converters (54), wherein the second auxiliary converters (54) are configured to add the second compensation voltage to the second output voltages generated by the corresponding second electrical converters (52) upon receiving the second compensation signal.

11. Method in accordance with claim 10, wherein

the first compensation voltage value (VC1) is determined depending on the difference by determining a first compensation voltage reference value (VCREF 1) depending on the difference and by adding a predetermined bias voltage value (VB) to the first compensation voltage reference value (VCREF1); and/or
the second compensation voltage value (VC2) is determined depending on the difference by determining a second compensation voltage reference value (VCREF2) depending on the difference and by adding the predetermined bias voltage value (VB) to the second compensation voltage reference value (VCREF2).

12. Method in accordance with one of claims 10 or 11, comprising:

receiving a second DC bus voltage value (V2) corresponding to an actual second DC bus voltage actually generated by the converter arrangement (20);
determining a difference between the second DC bus voltage value (V2) and a second DC bus voltage reference value (V2REF), wherein the second DC bus voltage reference value (V2REF) corresponds to the second DC voltage to be generated by the converter arrangement (20); and
controlling the first auxiliary converter (24) and the second auxiliary converter (54) depending on the difference between the second DC bus voltage value (V2) and the second DC bus voltage reference value (V2REF) such that the actual second DC bus voltage corresponds to the second DC bus voltage reference value (V2REF).

13. Controller (70, 80) for operating a converter arrangement (20), the controller (70, 80) comprising:

a memory for storing one or more current values and/or one or more voltage values; and
a processor communicatively coupled to the memory and being configured for carrying out the method in accordance with one of claims 10 to 12 based on the one or more current values and/or one or more voltage values, respectively.

14. Computer program for operating a converter arrangement (20) according to one of claims 1 to 9, the computer program comprising computer-readable instructions which, when being executed by a processor of a controller (70, 80) according to claim 13, carry out the method in accordance with one of claims 10 to 12.

15. Computer-readable medium on which a computer program according to claim 14 is stored.

**Fig. 1**

**Fig. 2**

**Fig. 3**

**Fig. 4**

**Fig. 5**

Fig. 6

Fig. 7

Fig. 8

# Fig. 9

Fig. 10

EP 4 693 855 A1

Europäisches
Patentamt

European
Patent Office

Office européen
des brevets

# EUROPEAN SEARCH REPORT

**Application Number**

EP 24 19 3006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FAN GAO ET AL: "High-Efficiency High-Density MHz Cellular DC/DC Converter for On-Board Charger", IEEE TRANSACTIONS ON POWER ELECTRONICS, INSTITUTE OF ELECTRICAL AND ELECTRONICS ENGINEERS, USA, vol. 37, no. 12, 26 July 2022 (2022-07-26), pages 15666-15677, XP011918905, ISSN: 0885-8993, DOI: 10.1109/TPEL.2022.3194327 [retrieved on 2022-07-27] * figures 1,2,7,9,10,11,13 * * Section IV * * page 15667, left-hand column, paragraph 2 * ----- | 1-15 | INV. H02M1/00 ADD. H02M3/00 H02M3/28 H02M3/335 |
| X | PARK KIWOO ET AL: "A Bidirectional Double Uneven Power Converter Based DC-DC Converter for Solid-State Transformers", ELECTRONICS, vol. 7, no. 11, 19 November 2018 (2018-11-19), page 334, XP055957763, DOI: 10.3390/electronics7110334 * figures 1,2 * * Section 2.1 * ----- -/-- | 1-15 | **TECHNICAL FIELDS SEARCHED (IPC)** H02M |

The present search report has been drawn up for all claims

| Place of search | Date of completion of the search | Examiner |
|---|---|---|
| The Hague | 13 January 2025 | Kail, Maximilian |

Europäisches
Patentamt

European
Patent Office

Office européen
des brevets

## EUROPEAN SEARCH REPORT

**Application Number**

EP 24 19 3006

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI RUIZHI ET AL: "An Input-Series-Output-Parallel Connected Four-Switch Buck-Boost-Integrated CLLC DC Transformer with Bidirectional Natural Power-Sharing Property", 2023 IEEE ENERGY CONVERSION CONGRESS AND EXPOSITION (ECCE), IEEE, 29 October 2023 (2023-10-29), pages 3224-3229, XP034508255, DOI: 10.1109/ECCE53617.2023.10361979 [retrieved on 2023-12-29] * abstract; figure 2 * * Section II C. * | 1-15 | |
| A | MURILLO-YARCE DUBERNEY ET AL: "A Reconfigurable Topology for Integration of Removable Batteries in an Electric Powertrain With 400 V and 800 V Compatibility", 2024 IEEE APPLIED POWER ELECTRONICS CONFERENCE AND EXPOSITION (APEC), IEEE, 25 February 2024 (2024-02-25), pages 3092-3099, XP034597448, DOI: 10.1109/APEC48139.2024.10509320 [retrieved on 2024-05-03] * figures 5,6 * | 1-15 | **TECHNICAL FIELDS SEARCHED (IPC)** |
| A | CAO YULIANG ET AL: "DC Distribution Converter with Partial Power Processing for LVDC/MVDC Systems", 2021 IEEE FOURTH INTERNATIONAL CONFERENCE ON DC MICROGRIDS (ICDCM), IEEE, 18 July 2021 (2021-07-18), pages 1-8, XP033953748, DOI: 10.1109/ICDCM50975.2021.9504626 [retrieved on 2021-08-02] * figures 2,5,9 * | 1-15 | |

-/--

The present search report has been drawn up for all claims

| Place of search | Date of completion of the search | Examiner |
|---|---|---|
| The Hague | 13 January 2025 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| Europäisches Patentamt European Patent Office Office européen des brevets | **EUROPEAN SEARCH REPORT** | **Application Number** **EP 24 19 3006** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU TIANJI ET AL: "Light-Load Efficiency Improvement of MHz RDCX Based on Output Voltage Ripple and Resonant Pulse Number Control", 2023 IEEE 2ND INTERNATIONAL POWER ELECTRONICS AND APPLICATION SYMPOSIUM (PEAS), IEEE, 10 November 2023 (2023-11-10), pages 299-303, XP034527055, DOI: 10.1109/PEAS58692.2023.10395732 [retrieved on 2024-01-25] * figures 1,4 * ----- | 1-15 | |
| A | WU XINKE ET AL: "High Efficiency High Density 1 MHz 380-12 V DCX With Low FoM Devices", IEEE TRANSACTIONS ON INDUSTRIAL ELECTRONICS, IEEE SERVICE CENTER, PISCATAWAY, NJ, USA, vol. 67, no. 2, 1 February 2020 (2020-02-01), pages 1648-1656, XP011748116, ISSN: 0278-0046, DOI: 10.1109/TIE.2019.2901570 [retrieved on 2019-10-02] * figure 8 * ----- | 1-15 | TECHNICAL FIELDS SEARCHED (IPC) |

The present search report has been drawn up for all claims

| Place of search | Date of completion of the search | Examiner |
|---|---|---|
| The Hague | 13 January 2025 | Kail, Maximilian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................
& : member of the same patent family, corresponding document

EPO FORM 1503 03.82 (P04C01)

page 3 of 3